(19) Europäisches Patentamt
European Patent Office
Office européen des brevets

(11) **EP 3 928 033 B1**

(12) **EUROPÄISCHE PATENTSCHRIFT**

(45) Veröffentlichungstag und Bekanntmachung des Hinweises auf die Patenterteilung:
**06.03.2024   Patentblatt 2024/10**

(21) Anmeldenummer: **20714938.6**

(22) Anmeldetag: **18.03.2020**

(51) Internationale Patentklassifikation (IPC):
**F23R 3/00** *(2006.01)*     **F23N 5/00** *(2006.01)*

(52) Gemeinsame Patentklassifikation (CPC):
**F23R 3/00; F02C 9/00; F23N 1/002; F23N 5/003; F23N 5/242;** F05D 2260/96; F05D 2260/964; F05D 2270/44; F23N 2223/10; F23N 2223/40; F23N 2225/08

(86) Internationale Anmeldenummer:
**PCT/EP2020/057424**

(87) Internationale Veröffentlichungsnummer:
**WO 2020/200783 (08.10.2020 Gazette 2020/41)**

(54) **VERFAHREN ZUM STEUERN EINER GASTURBINE**

METHOD FOR CONTROLLING A GAS TURBINE

PROCÉDÉ DE COMMANDE D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2019   DE 102019204422**

(43) Veröffentlichungstag der Anmeldung:
**29.12.2021   Patentblatt 2021/52**

(73) Patentinhaber: **Siemens Energy Global GmbH & Co. KG**
**81739 München (DE)**

(72) Erfinder:
• **KAISER, Markus**
**80539 München (DE)**
• **HEESCHE, Kai**
**81539 München (DE)**

(56) Entgegenhaltungen:
DE-A1- 4 241 729        US-A1- 2005 247 064
US-A1- 2014 123 624     US-A1- 2015 152 791
US-A1- 2016 010 493     US-A1- 2017 363 015

EP 3 928 033 B1

**Beschreibung**

Die Erfindung betrifft ein Verfahren zum Steuern einer Gasturbine anhand einer zukünftigen Verbrennungsdynamik der Gasturbine. Ferner betrifft die Erfindung ein Computerprogramm zur Ausführung des Verfahrens, eine Steuereinheit zur Ausführung des Verfahrens und eine Gasturbine mit einer solchen Steuereinheit.

Gasturbinen, beispielsweise verwendet bei der Stromerzeugung, aber auch in anderen Anwendungsfällen, stellen komplexe technische Systeme dar, bei denen es trotz Verständnis der zugrundeliegenden physikalischen Effekte eine Herausforderung ist, die inneren Abläufe innerhalb der Gasturbine zu kontrollieren. Die Verbrennungsdynamiken innerhalb einer Gasturbine führen zu teilweise hohen Beschleunigungen von Gasmolekülen innerhalb der Turbine, die, wenn ein vorgegebener Grenzwert überschritten wird, zu einer Beschädigung oder Zerstörung der Gasturbine führen können. Folglich gilt es, die Verbrennungsdynamik innerhalb der Gasturbine so zu steuern, dass solche Beschleunigungen möglichst nicht oder nur in einem von Werkstoffen beziehungsweise vom Material der Gasturbine verträglichen Maß auftreten. Es existieren entsprechende Sicherheitssysteme, die kurzfristig auf hohe Beschleunigungen innerhalb der Gasturbine reagieren und eine Brennstoffzufuhr zur Gasturbine verringern beziehungsweise unterbrechen können. Diese Sicherheitssysteme basieren auf einer aktuellen Messung der Verbrennungsdynamik innerhalb der Gasturbine und erlauben einen beschädigungs- beziehungsweise zerstörungsfreien Betrieb der Gasturbine. Jeder Eingriff eines solchen Sicherheitssystems hat durch die verringerte beziehungsweise unterbrochene Brennstoffzufuhr jedoch eine massive Auswirkung auf Betriebsparameter der Gasturbine wie beispielsweise auf die abgegebene Leistung, die Zusammensetzung der Abgase hinsichtlich der Emissionsgrenzwerte oder den stabilen Betrieb der Gasturbine.

Beispielsweise die US 2014/123624 A1 behandelt Verbrennungskontrollsystem für Gasturbinen. In der US 2005/247064 A1 ist des Weiteren ein System zur Überwachung der dynamischen Stabilitätsspanne in einer Brennkammer in einem Gasturbinentriebwerk beschrieben. Aus der US 2016/010493 A1 ist außerdem ein Verfahren zur Bestimmung einer Strömungsrate eines Oxidationsmittelstroms und eines Kraftstoffstroms sowie zur Steuerung der jeweiligen Ströme zu einem Gasturbinentriebwerk mit EGR beschrieben. Weiter ist aus der US 2015/152791 A1 ein Verfahren bekannt, das das Durchführen einer Turbinenbrenner-Diagnoseroutine umfasst. In der US 2017/363015 A1 ist darüber hinaus ein Gasturbinenregler beschrieben.

Der Erfindung liegt die Aufgabe zugrunde, ein alternatives beziehungsweise zusätzliches Sicherheitskonzept für den Betrieb einer Gasturbine bereitzustellen. Dabei soll insbesondere eine Vorhersage einer zukünftigen Verbrennungsdynamik innerhalb der Gasturbine genutzt werden, die aus einer anhand eines Messwertes ermittelten Verbrennungsdynamik bereitgestellt wird. Dadurch kann eine hinsichtlich vorgegebener Betriebsparameter der Gasturbine abhängige, diese Betriebsparameter weniger beeinflussende, Steuerung der Gasturbine erfolgen.

Diese Aufgabe wird durch ein Verfahren zum Steuern einer Gasturbine gemäß Anspruch 1, mit den im Folgenden beschriebenen Schritten gelöst. Zunächst wird in einem Messschritt eine Zustandsgröße einer Verbrennung innerhalb der Gasturbine gemessen. In einem daran anschließenden Vorhersageschritt wird eine zukünftige Verbrennungsdynamik anhand der gemessenen Zustandsgröße vorhergesagt. Anhand der Vorhersage der zukünftigen Verbrennungsdynamik wird nun in einem Steuerschritt ein Steuersignal für die Gasturbine ausgegeben. Die Ermittlung der Vorhersage der zukünftigen Verbrennungsdynamik erlaubt zusätzlich oder alternativ zum Ausführen eines Eingriffs aufgrund der aktuell gemessenen Zustandsgröße auch einen Eingriff in die Steuerung der Gasturbine anhand der zukünftigen Verbrennungsdynamik aus dem Messwert. Dadurch kann vorhergesagt werden, ob in naher Zukunft Beschleunigungswerte innerhalb der Gasturbine auftreten werden, die eine Beschädigung und/oder Zerstörung der Gasturbine zur Folge haben könnten. Sollte dies der Fall sein, kann ein entsprechendes Steuersignal ausgegeben werden, mit dem die Verbrennungsdynamik innerhalb der Gasturbine derart geändert werden kann, dass solche Beschleunigungen nicht oder nur in geringerem Maß auftreten. Dadurch kann in diesem Steuerungsverfahren neben einem nachträglichen Eingriff bei zu hohen Beschleunigungen auch ein vorausschauender Eingriff, wenn zu hohe Beschleunigungen drohen, erfolgen. Ein solcher vorausschauender Eingriff kann dabei weniger stark ausgeprägt sein, sodass insgesamt eine verbesserte Steuerung der Gasturbine erreicht wird. Ferner wird im Vorhersageschritt ein Grundzustandsprozess, ein Rauschprozess und ein Spitzenprozess berücksichtigt, um die zukünftige Verbrennungsdynamik vorherzusagen.

In einer Ausführungsform wird aus der ermittelten Zustandsgröße in einem optionalen Ermittlungsschritt eine aktuelle Verbrennungsdynamik ermittelt und die Vorhersage der zukünftigen Verbrennungsdynamik anhand der gemessenen Zustandsgröße im Vorhersageschritt unter Berücksichtigung der ermittelten Verbrennungsdynamik durchgeführt. Dadurch können insbesondere mehrere, in zeitlichem Abstand zueinander gemessene Messwerte der Zustandsgröße der Verbrennung innerhalb der Gasturbine bei der Vorhersage der zukünftigen Verbrennungsdynamik berücksichtigt werden. Dies ermöglicht eine genauere Vorhersage der zukünftigen Verbrennungsdynamik.

In einer Ausführungsform umfasst die aktuelle Verbrennungsdynamik einen Verlauf der Verbrennungsdynamik in einem ersten vorgegebenen Zeitraum. Es kann vorgesehen sein, dass sämtliche innerhalb des ersten vorgegebenen Zeitraums gemessene Werte der Zustandsgröße der Verbrennung für die Ermittlung der aktuellen Verbrennungsdynamik im ersten vorgegebenen Zeitraum berücksichtigt werden. Dadurch kann eine weitere Verbesserung der Vorhersage der zukünftigen Verbrennungsdynamik erreicht werden.

In einer Ausführungsform des Verfahrens wird aus einer Mehrzahl von aktuellen Verbrennungsdynamiken eine Mehrzahl von zukünftigen Verbrennungsdynamiken bestimmt. Anhand der Mehrzahl der zukünftigen Verbrennungsdynamiken werden auszugebende Steuersignale festgelegt, und die Ausgabe der Steuersignale im Steuerschritt erfolgt derart, dass anhand einer aktuell ermittelten Verbrennungsdynamik das auszugebende Steuersignal ausgewählt wird. Dies ermöglicht, während des Betriebs einer Gasturbine aktuelle Verbrennungsdynamiken zu ermitteln und anhand der aktuellen Verbrennungsdynamiken zukünftige Verbrennungsdynamiken vorherzusagen und festzulegen, ob beziehungsweise welche Steuersignale ausgegeben werden sollten, wenn bestimmte aktuelle Verbrennungsdynamiken auftreten, die zu bestimmten zukünftigen Verbrennungsdynamiken führen würden. Dies ermöglicht, einem Betreiber der Gasturbine zu evaluieren, ob die auszugebenden Steuersignale in Bezug auf die zukünftigen Verbrennungsdynamiken sinnvoll sind und ein entsprechender Probelauf durchgeführt werden soll. Dies ermöglicht, anhand gemessener Werte der Zustandsgröße ein Programm zur Steuerung der Gasturbine zu erstellen und erst in einem zweiten Schritt nach Freigabe durch den Betreiber der Gasturbine die dabei ermittelten auszugebenden Steuersignale anzuwenden. Dadurch kann die Akzeptanz, dieses neuartige Verfahren für eine Gasturbine im laufenden Betrieb zu testen, erhöht werden.

In einer Ausführungsform umfasst die zukünftige Verbrennungsdynamik eine Vorhersage über einen Verlauf der Verbrennungsdynamik in einem zweiten vorgegebenen Zeitraum. Es kann vorgesehen sein, dass die Ausgabe eines Steuersignals dann erfolgt, wenn innerhalb des zweiten vorgegebenen Zeitraums eine Anzahl oder eine Stärke von Beschleunigungen aufgrund der zukünftigen Verbrennungsdynamik zu groß wird. Dies kann unter anderem bedeuten, dass die Ausgabe des Steuersignals dann erfolgt, wenn im zweiten vorgegebenen Zeitraum eine Mehrzahl von Beschleunigungen oberhalb eines Grenzwerts auftreten wird.

Es kann vorgesehen sein, dass der erste vorgegebene Zeitraum und der zweite vorgegebene Zeitraum den Ablauf einer identischen Zeit beinhalten.

Gemäß der Erfindung werden im Vorhersageschritt ein Grundzustandsprozess, ein Rauschprozess und ein Spitzenprozess berücksichtigt, um die zukünftige Verbrennungsdynamik vorherzusagen. Beschleunigungen aufgrund der Verbrennungsdynamik in Gasturbinen lassen sich im Allgemeinen in die drei genannten Prozesse aufteilen. Der Grundzustandsprozess ist dabei ein Prozess, der zu einer langsamen Veränderung der Verbrennungsdynamik über mehrere Sekunden oder sogar über mehrere 10 Sekunden führt. Der Rauschprozess beinhaltet eine Überlagerung des Grundzustandsprozesses mit statistischem Rauschen auf einer deutlich kleineren Zeitskala. Ein Spitzenprozess stellt eine auf einer sehr kurzen Zeitskala auftretende, zusätzliche, sehr große Beschleunigung innerhalb der Verbrennungsdynamik dar. Die Höhe der durch den Spitzenprozess ausgelösten Beschleunigungsspitzen ist dabei deutlich höher als die Höhe des Rauschens des Rauschprozesses. Die Beschleunigungen der Verbrennung innerhalb der Verbrennungsdynamik, die zu einer Beschädigung und/oder Zerstörung der Gasturbine führen könnten, sind im Wesentlichen auf den Spitzenprozess zurückzuführen. Konventionelle Steuerungen würden nun bei Auftreten einer oder mehrerer entsprechender Spitzen eine Brennstoffzufuhr zur Gasturbine verringern, um die auftretenden Beschleunigungen unterhalb eines vorgegebenen Grenzwerts zu halten. Durch die durch das erfindungsgemäße Verfahren angegebene Vorhersage des Spitzenprozesses, insbesondere über eine Anzahl und Höhe der in naher Zukunft auftretenden Spitzen, kann eine proaktive Steuerung der Gasturbine erfolgen, bei der die Verbrennungsdynamik derart geändert wird, das Spitzen nur in einem Maß beziehungsweise nur in einer Anzahl und Höhe auftreten, die einen beschädigungs- beziehungsweise zerstörungsfreien Betrieb der Gasturbine erlaubt.

In einer Ausführungsform werden der Grundzustandsprozess, der Rauschprozess und der Spitzenprozess im Vorhersageschritt mittels eines bayesianischen Modells vorhergesagt. Bayesianische Modelle sind auch bei kleiner Datengrundlage verwendbar und somit zur Vorhersage der zukünftigen Verbrennungsdynamik geeignet. Dabei kann ein Modell zur Vorhersage der zukünftigen Verbrennungsdynamik überprüft werden, indem das Modell auf eine aktuelle Verbrennungsdynamik angewendet wird, und eine zukünftige vorhergesagte Verbrennungsdynamik mit einer zukünftigen gemessenen Verbrennungsdynamik verglichen wird.

In einer Ausführungsform werden der Grundzustandsprozess, der Rauschprozess und der Spitzenprozess additiv betrachtet. Dies ermöglicht unter anderem eine einfachere Umsetzung eines bayesianischen Modells im Vorhersageschritt.

In einer Ausführungsform wird der Spitzenprozess als diskrete Funktion modelliert. Dabei kann der Spitzenprozess als Produkt einer diskreten Teilfunktion und einer kontinuierlichen Teilfunktion modelliert werden. Die diskrete Teilfunktion kann dabei verwendet werden, um zufällige Zeiten der Spitzen zu modellieren. Die kontinuierliche Teilfunktion kann dabei verwendet werden, um eine funktionelle Abhängigkeit zwischen der Zustandsgröße beziehungsweise der aktuellen Verbrennungsdynamik und einer Frequenz, mit der die Spitzen auftreten, und den Amplituden der Spitzen zu modellieren.

In einer Ausführungsform wird der Grundzustandsprozess als kontinuierliche Funktion modelliert. Der Rauschprozess kann sowohl durch eine kontinuierliche als auch eine diskrete Funktion modelliert werden.

In einer Ausführungsform wird der Grundzustandsprozess als ein erster Gaußprozess modelliert. Der erste Gaußprozess kann dabei einen unsicheren Verlauf einer deterministischen Funktion repräsentieren. Insbesondere kann dadurch eine Regression der bisherigen Messwerte genutzt werden, um eine Vorhersage des Grundzustandsprozesses für die Zukunft zu ermitteln. Der erste Gaußprozess stellt dabei eine kontinuierliche Funktion dar.

In einer Ausführungsform wird der Rauschprozess in Form von weißem Rauschen modelliert. Weißes Rauschen zeichnet sich dadurch aus, dass anhand des bisherigen Verlaufs des Rauschens keinerlei Vorhersage für den zukünftigen Verlauf des Rauschens getroffen werden, kann, berücksichtigt aber, dass eine Amplitude des Rauschprozesses im Zeitverlauf identisch bleibt.

In einer Ausführungsform wird der Spitzenprozess als eine Überlagerung eines Poisson-Prozesses und eines zweiten Gaußprozesses modelliert. Der Poisson-Prozess stellt dabei eine diskrete Teilfunktion dar, während der zweite Gaußprozess eine kontinuierliche Teilfunktion darstellt. Durch die Überlagerung ergibt sich der Spitzenprozess als diskrete Funktion. Der Poisson-Prozess kann dabei verwendet werden, um zufällige Zeiten der Spitzen zu modellieren. Dies bedeutet insbesondere, dass mittels des Poisson-Prozesses die zufälligen Zeiten, zu denen die Spitzen auftreten könnten, bei der Vorhersage der zukünftigen Verbrennungsdynamik berücksichtigt werden. Es kann vorgesehen sein, den zweiten Gaußprozess zu verwenden, um eine funktionelle Abhängigkeit zwischen der Zustandsgröße beziehungsweise der aktuellen Verbrennungsdynamik und einer Frequenz, mit der die Spitzen auftreten, und den Amplituden der Spitzen zu modellieren.

In einer Ausführungsform wird mittels des Steuersignals eine Menge eines in die Gasturbine eingebrachten Brennstoffs und/oder ein Verhältnis des an unterschiedlichen Orten in die Gasturbine eingebrachten Brennstoffs und/oder eine Abgastemperatur verändert. Gasturbinen weisen im Allgemeinen einen Verdichter, eine Brennkammer und eine Turbine, insbesondere eine Gasexpansionsturbine, auf. Der zum Betrieb der Gasturbine notwendige Brennstoff wird in die Brennkammer eingebracht. Dabei kann es vorgesehen sein, den Brennstoff an unterschiedlichen Orten in die Brennkammer einzubringen. Eine Steuerung der Gasturbine kann einerseits dadurch erfolgen, die Menge des eingebrachten Brennstoffs insgesamt zu verändern. Andererseits kann eine Steuerung der Gasturbine dadurch erfolgen, dass das Verhältnis des eingebrachten Brennstoffs an den unterschiedlichen Orten zueinander verändert wird.

In einer Ausführungsform wird das Steuersignal anhand eines Zielparameters oder einer Kombination von Zielparametern ausgegeben. Mindestens ein Zielparameter kann dabei anhand eines Emissionswertes und/oder anhand einer Verbrennungsstabilität und/oder anhand einer Effizienz einer Verbrennung festgelegt werden. Alternative Zielparameter sind ebenfalls denkbar. Im Allgemeinen wird durch eine Verringerung einer Brennstoffzufuhr einer Gasturbine die abgegebene Leistung der Gasturbine verringert. Dies führt im Allgemeinen gleichzeitig dazu, dass mindestens ein Zielparameter hinsichtlich eines Emissionswertes, also insbesondere hinsichtlich der Schadstoffemissionen der Gasturbine oder hinsichtlich der Verbrennungsstabilität oder hinsichtlich der Effizienz der Verbrennung verbessert wird. Es kann jedoch vorgesehen sein, dass im laufenden Betrieb der Gasturbine eine Leistungsverringerung nicht in Betracht kommt, da beispielsweise ein Betreiber der Gasturbine sich vertraglich zur Bereitstellung einer gewissen Leistung der Gasturbine verpflichtet hat, beispielsweise wenn die Gasturbine zur Stromerzeugung genutzt wird. Eine Verringerung der Leistung der Gasturbine führt dann zu erheblichen Einnahmeausfällen beziehungsweise sogar zu entsprechenden Vertragsstrafen. Die Auswahl beziehungsweise die Festlegung der Zielparameter kann dann derart erfolgen, dass die abgegebene Leistung möglichst gleich bleibt und einer der Zielparameter anhand des Emissionswerts, der Verbrennungsstabilität oder der Effizienz festgelegt wird, um einen möglichst emissionsarmen, stabilen oder effizienten Betrieb bei vorgegebener Leistungsabgabe zu ermöglichen. Es kann sein, dass nicht alle drei der genannten Zielparameter gleichzeitig erfüllt werden können. Dann kann vorgesehen sein, eine entsprechende Auswahl des zu berücksichtigenden Zielparameters erfolgen. Zusätzlich kann es vorgesehen sein, nach der Optimierung hinsichtlich der Zielparameter hinsichtlich der Emissionen, der Verbrennungsstabilität und/oder der Effizienz als letzte Maßnahme eine Verringerung der abgegebenen Leistung der Gasturbine ebenfalls vorzusehen.

Die Erfindung umfasst ebenfalls ein Computerprogramm, welches Befehle umfasst, die bei der Ausführung des Computerprogramms durch einen Computer diesen dazu veranlassen, das erfindungsgemäße Verfahren durchzuführen. Das Computerprogramm kann dabei insbesondere auf einem maschinenlesbaren Speicher bereitgestellt werden, beispielsweise auf einem USB-Stick, auf einer CD, auf einer DVD, auf einer Festplatte und/oder auf einem Server im Internet.

Die Erfindung umfasst ferner eine Steuereinheit mit einem Eingang zum Messen einer Zustandsgröße und einem Ausgang zur Ausgabe eines Steuersignals. Ferner umfasst die Steuereinheit eine Recheneinheit, die eingerichtet ist, das erfindungsgemäße Verfahren durchzuführen. Die Steuereinheit kann einen Speicher, insbesondere einen maschinenlesbaren Speicher, aufweisen, auf dem das erfindungsgemäße Computerprogramm gespeichert ist.

Ferner umfasst die Erfindung eine Gasturbine mit einer solchen Steuereinheit. Es kann vorgesehen sein, mehr als eine Zustandsgröße zu messen und die Vorhersage der zukünftigen Verbrennungsdynamik anhand dieser mehreren gemessenen Zustandsgrößen zu bestimmen. In diesem Fall kann vorgesehen sein, dass die Steuereinheit mehr als einen Eingang für entsprechende Steuersignale enthält. Die mehreren gemessenen Zustandsgrößen können insbesondere die Ermittlung der aktuellen Verbrennungsdynamik verbessern.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung

FIG 1 ein Ablaufdiagramm eines ersten Ausführungsbeispiels des Verfahrens;

FIG 2 ein Ablaufdiagramm eines zweiten Ausführungsbeispiels des Verfahrens;

FIG 3 ein Ablaufdiagramm eines dritten Ausführungsbeispiels des Verfahrens;

FIG 4 eine Gasturbine mit einer Steuereinheit; und

FIG 5 eine aktuelle Verbrennungsdynamik und eine Aufteilung der aktuellen Verbrennungsdynamik in einen Grundzustandsprozess, einen Rauschprozess und einen Spitzenprozess.

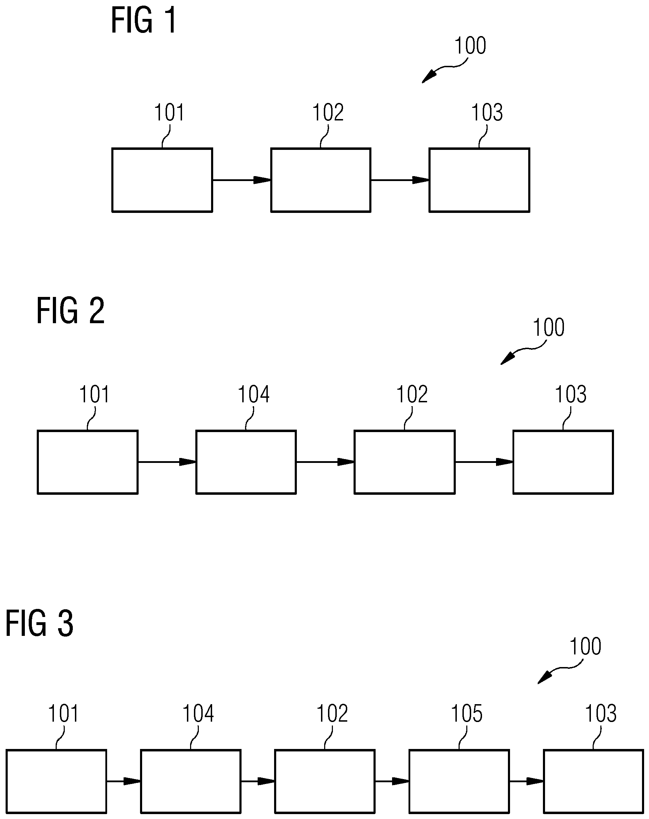

FIG 1 zeigt ein Verfahren 100 zum Steuern einer Gasturbine mit einem Messschritt 101, einem nach dem Messschritt 101 durchgeführten Vorhersageschritt 102 und einem nach dem Vorhersageschritt ausgeführten Steuerschritt 103. Im Messschritt 101 wird eine Zustandsgröße einer Verbrennung innerhalb einer Gasturbine gemessen. Der Messschritt 101 kann zusätzlich das Messen weiterer Zustandsgrößen der Verbrennung innerhalb der Gasturbine umfassen. Die Zustandsgröße, die im Messschritt 101 gemessen wird, kann beispielsweise eine Temperatur innerhalb der Gasturbine und/oder einen Luftdruck innerhalb oder außerhalb der Gasturbine und/oder eine Luftfeuchtigkeit innerhalb oder außerhalb der Gasturbine und/oder eine Vibration der Gasturbine umfassen. Eine Verbrennungsdynamik innerhalb der Gasturbine kann von einem Verbrennungszustand innerhalb der Gasturbine abhängen, wobei der Verbrennungszustand anhand der gemessenen Zustandsgröße ermittelt werden kann. Im Vorhersageschritt 102 wird eine zukünftige Verbrennungsdynamik anhand der gemessenen Zustandsgröße vorhergesagt. Diese zukünftige Verbrennungsdynamik kann Aussagen über zukünftig erwartete Beschleunigungen innerhalb der Gasturbine umfassen.

Im Steuerschritt 103 wird ein Steuersignal anhand der Vorhersage der zukünftigen Verbrennungsdynamik ausgegeben. Die Ausgabe dieses Steuersignals kann derart erfolgen, dass in der zukünftigen Verbrennungsdynamik bestimmte Beschleunigungen, die zu einer Beschädigung und/oder einer Zerstörung der Gasturbine führen könnten, vermieden oder verhindert werden.

FIG 2 zeigt ein weiteres Ausführungsbeispiel des Verfahrens 100 der FIG 1 mit einem zusätzlichen Ermittlungsschritt 104 zwischen dem Messschritt 101 und dem Vorhersageschritt 102. Im Ermittlungsschritt 104 wird aus der ermittelten Zustandsgröße eine aktuelle Verbrennungsdynamik ermittelt und die Vorhersage der zukünftigen Verbrennungsdynamik im Vorhersageschritt 102 anhand der gemessenen Zustandsgröße unter Berücksichtigung der ermittelten Verbrennungsdynamik durchgeführt.

In einem Ausführungsbeispiel umfasst die aktive Verbrennungsdynamik einen Verlauf der Verbrennungsdynamik in einem ersten vorgegebenen Zeitraum. Der erste vorgegebene Zeitraum kann dabei bis zu 60 Sekunden, insbesondere bis zu 30 Sekunden und bevorzugt insbesondere zwischen 5 und 20 Sekunden betragen. Aus einer über einen solchen Zeitraum ermittelten aktuellen Verbrennungsdynamik kann eine gute Vorhersage der zukünftigen Verbrennungsdynamik im Vorhersageschritt 102 erfolgen.

FIG 3 zeigt ein Ablaufdiagramm eines weiteren Ausführungsbeispiels des Verfahrens 100. Zusätzlich zu den in FIG 2 erläuterten Verfahrensschritten ist zwischen dem Vorhersageschritt 102 und dem Steuerschritt 103 ein Festlegungsschritt 105 vorgesehen. Im Ermittlungsschritt 104 wird eine Mehrzahl von aktiven Verbrennungsdynamiken in hintereinanderliegenden Zeiträumen ermittelt. Im Vorhersageschritt 102 wird zu jeder aktuellen Verbrennungsdynamik eine zukünftige Verbrennungsdynamik vorhergesagt. Im Festlegungsschritt 105 werden anhand der Mehrzahl der zukünftigen Verbrennungsdynamiken Steuersignale festgelegt. Die Ausgabe der Steuersignale im Steuerschritt 103 erfolgt anhand einer aktuell ermittelten Verbrennungsdynamik. In diesem Ausführungsbeispiel kann eine Gasturbine betrieben werden und während des Betriebs die Verbrennungsdynamik ermittelt und vorhergesagt werden. Anschließend können Steuersignale festgelegt werden anhand derer in einem Realbetrieb die Gasturbine gesteuert werden soll. Das Steuern selbst erfolgt dann anhand der vorab im Festlegungsschritt 105 festgelegten Steuersignale und ermöglicht einem Betreiber der Gasturbine, die auszuwählenden Steuersignale vorab zu evaluieren und für den laufenden Betrieb freizugeben.

Es kann in diesem Ausführungsbeispiel zusätzlich und optional vorgesehen sein, weitere Verbrennungsdynamiken vorherzusagen, die auf einer theoretischen Veränderung oder einer theoretischen Ausgabe von Steuersignalen und der daraus resultierenden Veränderungen der Verbrennungsdynamik beruhen. Auch für diese, nur theoretisch ermittelten und nicht mit einer aktuellen Verbrennungsdynamik hinterlegten zukünftigen Verbrennungsdynamiken können dann entsprechende Steuersignale festgelegt und vom Betreiber der Gasturbine evaluiert werden.

In einem Ausführungsbeispiel umfasst die zukünftige Verbrennungsdynamik eine Vorhersage über einen Verlauf der Verbrennungsdynamik in einem zweiten vorgegebenen Zeitraum. Die Dauer des zweiten vorgegebenen Zeitraums kann dabei der Dauer des Zeitraums des ersten vorgegebenen Zeitraums entsprechen und/oder beispielsweise bis zu 60 Sekunden, insbesondere bis zu 30 Sekunden und insbesondere bevorzugt zwischen 5 und 20 Sekunden betragen.

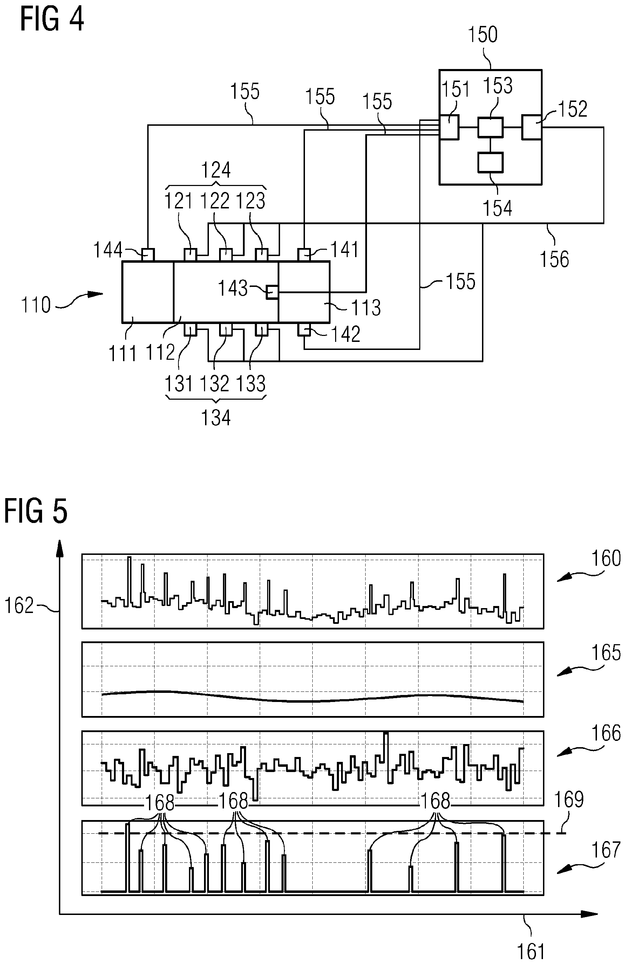

FIG 4 zeigt eine Gasturbine 110 mit einer Steuereinheit 150. Die Gasturbine 110 weist dabei einen Verdichter 111, eine Brennkammer 112 und die eigentliche Turbine 113 auf. Die Turbine 113 kann als Gasexpansionsturbine ausgestaltet sein. An der Brennkammer 112 sind ein erster Einlass 121, ein zweiter Einlass 122, ein dritter Einlass 123, ein vierter Einlass 131, ein fünfter Einlass 132 sowie ein sechster Einlass 133 angeordnet. Die Einlässe 121, 122, 123, 131, 132, 133 dienen einem Einbringen von Brennstoff in die Brennkammer 112. Der Brennstoff kann dann innerhalb der Brennkammer 112 verbrannt werden und dient dabei dem Antrieb der Gasturbine 110. Über die Menge des durch die Einlässe 121, 122, 123, 131, 132, 133 eingebrachten Brennstoffs kann eine abgegebene Leistung der Gasturbine 110 gesteuert werden. Dabei sind der erste Einlass 121, der zweite Einlass 122 und der dritte Einlass 123 zu einer ersten Einheit 124 zusammengefasst. Der vierte Einlass 131, der fünfte Einlass 132 und der sechste Einlass 133 sind zu einer zweiten Einheit 134 zusammengefasst. In alternativen, hier nicht gezeigten Ausführungsbeispielen kann nur die erste Einheit 124 vorgesehen sein. In weiteren alternativen, hier nicht gezeigten Ausführungsbeispielen können weitere Einheiten analog zur ersten Einheit 124 oder der zweiten Einheit 134 vorgesehen sein. Zum Steuern der Gasturbine 110 kann eine vorbestimmte Menge Brennstoff über die erste Einheit 124 beziehungsweise die zweite Einheit 134 in die Brennkammer 112 eingebracht werden. Zusätzlich kann das Verhältnis des eingebrachten Brennstoffs hinsichtlich des ersten Einlasses 121, des zweiten Einlasses 122 und des dritten Einlasses 123 bei gleichbleibender Menge des eingebrachten Brennstoffes der ersten Einheit 124 verändert werden. Gleiches gilt für das Verhältnis zwischen der mittels des vierten Einlasses 131, des fünften Einlasses 132 und des sechsten Einlasses 133 eingebrachten Brennstoffs der zweiten Einheit 134. Das Verhältnis der Einlässe 121, 122, 123, 131, 132, 133 der Einheiten 124, 134 zueinander kann dabei identisch sein. Das bedeutet, dass über den ersten Einlass 121 und den vierten Einlass 131 der selbe Anteil der Gesamtbrennstoffmenge der ersten Einheit 124 und der zweiten Einheit 134 eingebracht wird, selbiges gilt jeweils für den zweiten Einlass 122 und den fünften Einlass 132 beziehungsweise den dritten Einlass 123 und den sechsten Einlass 133. Ein erster Messsensor 141 ist an der Turbine 113 angeordnet, ebenso ein zweiter Messsensor 142. Ein dritter Messsensor 143 ist innerhalb der Brennkammer 112 angeordnet. Ein vierter Messsensor 144 ist am Verdichter 111 angeordnet. Die Messsensoren 141, 142, 143, 144 sind eingerichtet, eine Zustandsgröße einer Verbrennung innerhalb der Gasturbine 110 zu ermitteln. Der erste Messsensor 141 und der zweite Messsensor 142 können beispielsweise als Temperatursensor oder als Vibrationssensor ausgestaltet sein. Der dritte Messsensor 143 kann insbesondere als Temperatursensor zur Ermittlung einer Temperatur innerhalb der Brennkammer 112 ausgestaltet sein. Der vierte Messsensor 144 kann insbesondere als Vibrationssensor am Verdichter 111 ausgestaltet sein. Über Messleitungen 155 sind die Messsensoren 141, 142, 143, 144 mit einem Eingang 151 der Steuereinheit 150 verbunden. Ferner weist die Steuereinheit 150 einen Ausgang 152 auf, der mittels einer Steuerleitung 156 mit den Einlässen 121, 122, 123, 131, 132, 133 verbunden ist. Über den Ausgang 152 und die Steuerleitungen 156 kann eine Menge eines Brennstoffs, der in die Brennkammer 112 eingebracht wird, reguliert werden. Ferner kann zusätzlich ein Verhältnis der jeweils durch die Einlässe einer Einheit 124, 134 eingebrachten Brennstoffmenge variiert werden. Die Steuereinheit 150 weist ferner eine Recheneinheit 153 auf, die mit dem Eingang 151 und dem Ausgang 152 verbunden ist und die eingerichtet ist, das erfindungsgemäße, in den FIG 1 bis 3 beschriebene, Verfahren auszuführen. Zusätzlich weist die Steuereinheit 150 einen optionalen Speicher 154 auf, auf dem ein Computerprogramm zur Ausführung des Verfahrens gespeichert sein kann. Das Computerprogramm kann dabei Programmcode enthalten, der, wenn der Programmcode auf der Recheneinheit 153 ausgeführt wird, die Recheneinheit 153 dazu veranlasst, das erfindungsgemäße Verfahren auszuführen.

In einem Ausführungsbeispiel des Verfahrens wird mittels eines über den Ausgang 152 und die Steuerleitungen 156 ausgegebenen Steuersignals eine Menge eines in die Gasturbine 110 eingebrachten Brennstoffs, insbesondere eine Menge über die Einlässe 121, 122, 123, 131, 132, 133 eingebrachten Brennstoffs gesteuert. In einem Ausführungsbeispiel wird über den Ausgang 152 und die Steuerleitungen 156 ein Verhältnis von an unterschiedlichen Orten in die Gasturbine 110 eingebrachtem Brennstoff gesteuert, insbesondere durch Veränderung der Menge des über die Einlässe 121, 122, 123 der ersten Einheit 124 sowie über die Einlässe 131, 132, 133 der zweiten Einheit 134 eingebrachten Brennstoffmenge. In einem Ausführungsbeispiel wird durch das über den Ausgang 152 und die Steuerleitung 156 ausgegebene Steuersignal eine Abgastemperatur der Gasturbine 110 verändert.

In einem Ausführungsbeispiel wird das über den Ausgang 152 und die Steuerleitungen 156 ausgegebene Steuersignal anhand eines Zielparameters oder einer Kombination von Zielparametern ausgegeben. Mindestens ein Zielparameter wird anhand eines Emissionswerts und/oder anhand einer Verbrennungsstabilität und/oder anhand einer Effizienz der Verbrennung der Gasturbine 110 ausgewählt.

FIG 5 zeigt eine Verbrennungsdynamik 160, die einer aktuellen und aber auch einer zukünftigen Verbrennungsdynamik während der Ausführung des Verfahrens entsprechen kann. Eine x-Achse 161 stellt dabei die ablaufende Zeit, eine y-Achse 162 eine aufgrund einer Verbrennungsdynamik 160 innerhalb der Gasturbine 110 auftretende Beschleunigung dar. Die Verbrennungsdynamik 160 weist im Wesentlichen eine Grundlinie mit gewissen Schwankungen und einem gewissen Rauschen auf, die von einzelnen Beschleunigungsspitzen überlagert ist. Die Verbrennungsdynamik 160 lässt sich in drei Komponenten aufteilen, die ebenfalls in FIG 5 dargestellt sind. Die Verbrennungsdynamik 160 lässt sich in einen Grundzustandsprozess 165, einen Rauschprozess 166 sowie einen Spitzenprozess 167 auftrennen. Der Grundzustandsprozess 165 stellt dabei eine langsame Veränderung des Beschleunigungswertes über die Zeit aufgrund von verschiedenen Gasturbinenzuständen dar. Diesen überlagert ist der statistische Rauschprozess 166, der eine völlig zufällige Verteilung einer Rauschamplitude beinhaltet. Der Spitzenprozess 167 umfasst einzelne Spitzen 168, die zu bestimmten Zeiten zu einer hohen Beschleunigung innerhalb der Gasturbine 110 führen. Durch die Auftrennung der Verbrennungsdynamik 160 in den Grundzustandsprozess 165, den Rauschprozess 166 und den Spitzenprozess 167 kann die Verbrennungsdynamik 160 in statistisch unterschiedlich zu behandelnde Komponenten zerlegt werden. Erfolgt dies für einen aktuellen Zustandsprozess, der aufgrund von Messdaten ermittelt wurde, kann im Vorhersageschritt 102 anhand dieser Auftrennung jeweils ein zukünftiger Verlauf des Grundzustandsprozesses 165, des Rauschprozesses 166 und des Spitzenprozesses 167 bestimmt und durch Überlagerung des Grundzustandsprozesses 165, des Rauschprozesses 166 und des Spitzenprozesses 167 der zukünftige Verbrennungszustand ermittelt werden.

Es kann vorgesehen sein, den Grundzustandsprozess 165, den Rauschprozess 166 und den Spitzenprozess 167 im Vorhersageschritt 102 mittels eines bayesianischen Modells vorherzusagen. Bayesianische Modelle sind auch bei kleiner Datengrundlage verwendbar und somit zur Vorhersage der zukünftigen Verbrennungsdynamik 160 geeignet. Dabei kann ein Modell zur Vorhersage der zukünftigen Verbrennungsdynamik 160 überprüft werden, indem das Modell auf eine aktuelle Verbrennungsdynamik angewendet wird, und eine zukünftige vorhergesagte Verbrennungsdynamik mit einer zukünftigen gemessenen Verbrennungsdynamik verglichen wird.

In einer Ausführungsform werden der Grundzustandsprozess 165, der Rauschprozess 166 und der Spitzenprozess 167 additiv betrachtet. Dies ermöglicht unter anderem eine einfachere Umsetzung eines bayesianischen Modells im Vorhersageschritt 102.

In einer Ausführungsform wird der Spitzenprozess 167 als diskrete Funktion modelliert. Dabei kann der Spitzenprozess 167 als Produkt einer diskreten Teilfunktion und einer kontinuierlichen Teilfunktion modelliert werden. Die diskrete Teilfunktion kann dabei verwendet werden, um zufällige Zeiten der Spitzen 168 zu modellieren. Die kontinuierliche Teilfunktion kann dabei verwendet werden, um eine funktionelle Abhängigkeit zwischen der Zustandsgröße beziehungsweise der aktuellen Verbrennungsdynamik und einer Frequenz, mit der die Spitzen 168 auftreten, und den Amplituden der Spitzen 168 zu modellieren.

In einer Ausführungsform wird der Grundzustandsprozess 165 als kontinuierliche Funktion modelliert. Der Rauschprozess 166 kann sowohl durch eine kontinuierliche als auch eine diskrete Funktion modelliert werden.

Der Grundzustandsprozess 165 kann dabei als ein erster Gaußprozess modelliert werden. Der erste Gaußprozess stellt dabei eine kontinuierliche Funktion dar. Der Rauschprozess 166 kann in Form von weißem Rauschen modelliert werden. Der Spitzenprozess 167 kann als Überlagerung eines Poisson-Prozesses und eines zweiten Gaußprozesses modelliert werden. Dabei kann der Poisson-Prozess verwendet werden, um zufällige Zeiten der Spitzen 168 zu modellieren. Der Poisson-Prozess stellt eine diskrete Teilfunktion dar. Der zweite Gaußprozess kann verwendet werden, um eine funktionale Abhängigkeit zwischen der ermittelten Verbrennungsdynamik 160 und der Frequenz und/oder Höhe der Spitzen 168 des Spitzenprozesses 167 zu ermitteln. Der zweite Gaußprozess stellt eine kontinuierliche Teilfunktion dar. Durch die Überlagerung wird dabei der Spitzenprozess als diskrete Funktion modelliert.

In der zukünftigen Verbrennungsdynamik 160 können die auszugebenden Steuersignale anhand der Höhe und Frequenz der Spitzen 168 ausgewählt werden, um insbesondere über einen vorgegebenen dritten Zeitraum keine oder nur eine bestimmte Anzahl von Spitzen 168 über einem in FIG 5 mit einer gestrichelten Linie dargestellten Grenzwert 169 zuzulassen. In der Darstellung der FIG 5 ist nur eine Spitze 168 höher als der Grenzwert 169. Es kann beispielsweise sein, dass ein einmaliges Auftreten einer solchen Beschleunigung noch nicht zu einer Beschädigung und/oder Zerstörung der Gasturbine 110 führt. Erst bei mehrfachem Auftreten einer Spitze 168 oberhalb des Grenzwerts 169 ist ein entsprechender Eingriff durch die Steuerung notwendig.

Es kann vorgesehen sein, dass die Vorhersage der zukünftigen Verbrennungsdynamik 160 mit den im Folgenden beschriebenen Formeln und Methoden durchgeführt wird. Es werden Datenpaare (x,y) betrachtet, wobei jedem x-Wert ein y-Wert zugeordnet ist. Der x-Wert kann dabei die abgelaufene Zeit sein, der y-Wert kann eine die Verbrennungsdynamik 160 beschreibende Grö-ße, beispielsweise eine Beschleunigung sein. Die Zuordnung der x-Werte zu den y-Werten erfolgt anhand der Formel:

$$y = f(x) + g(x) + \epsilon$$

Die Funktion f(x) stellt dabei eine Grundzustandsfunktion dar, so dass der Grundzustandsprozess 165 mit der Funktion f(x) beschrieben wird. Die Funktion g(x) stellt dabei eine Spitzenfunktion dar, so dass der Spitzenprozess 167 mit der Funktion g(x) beschrieben wird. $\epsilon$ stellt das Rauschen dar, so dass der Rauschprozess 166 durch $\epsilon$ beschrieben wird.

In bayesianischen Modellen wird ein Parametersatz $\theta$ betrachtet, mit dem eine Wahrscheinlichkeitsbetrachtung für eine Zuordnung der x-Werte zu den y-Werten betrachtet werden kann. Die Wahrscheinlichkeitsbetrachtung kann mittels folgender Formel dargestellt werden:

$$p(y|\theta, x) = \int \underbrace{p(y|f, g)}_{\text{Addition und Rauschen}} \underbrace{p(f|\theta, x)}_{\text{Grundzustand}} \underbrace{P(g|\theta, x)}_{\text{Spitzen}} \underbrace{p(\theta)}_{\text{Expertenwissen}} df dg d\theta$$

Durch den Addition- und Rauschterm wird dabei die additive Betrachtung von Grundzustandsprozess 165, Rauschprozess 166 und Spitzenprozess 167 berücksichtigt. Die gesamte Zuordnung der x-Werte zu den y-Werten kann nur erfolgen, wenn alle Terme gleichzeitig betrachtet werden. Da das in der Formel angegebene Integral im Allgemeinen nicht lösbar ist, kann das Integral zunächst mittels Variationsrechnung approximiert und anschließend mittels Sampling berechnet werden. Beim Sampling können dabei zufällige Ziehungen mit einer vorgegebenen Wahrscheinlichkeitsverteilung zur Berechnung des approximierten Integrals verwendet werden. Das Expertenwissen kann dabei Teil eines Priors des bayesianischen Modells sein.

Diese beschriebene Methode kann insbesondere angewendet werden, wenn der Grundzustandsprozess 165 als kontinuierliche Funktion und der Spitzenprozess 167 als kontinuierliche Funktion modelliert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung gemäß den Ansprüchen zu verlassen.

**Patentansprüche**

1. Verfahren (100) zum Steuern einer Gasturbine (110) mit den folgenden Schritten:

   - Messen einer Zustandsgröße einer Verbrennung innerhalb der Gasturbine (110) in einem Messschritt (101);
   - Vorhersage einer zukünftigen Verbrennungsdynamik (160) anhand der gemessenen Zustandsgröße in einem Vorhersageschritt (102); und
   - Ausgabe eines Steuersignals anhand der Vorhersage der zukünftigen Verbrennungsdynamik (160) in einem Steuerschritt (103),

   **dadurch gekennzeichnet, dass**

   im Vorhersageschritt (102) ein Grundzustandsprozess (165), ein Rauschprozess (166) und ein Spitzenprozess (167) berücksichtigt werden, um die zukünftige Verbrennungsdynamik (160) vorherzusagen,
   wobei der Grundzustandsprozess ein Prozess ist, der zu einer langsamen Veränderung der Verbrennungsdynamik über mehrere Sekunden oder über mehrere 10 Sekunden führt,
   wobei der Rauschprozess eine Überlagerung des Grundzustandsprozesses mit statistischem Rauschen auf einer deutlich kleineren Zeitskala beinhaltet, und
   wobei der Spitzenprozess eine auf einer sehr kurzen Zeitskala auftretende, zusätzliche, sehr große Beschleunigung innerhalb der Verbrennungsdynamik darstellt.

2. Verfahren (100) nach Anspruch 1, wobei aus der ermittelten Zustandsgröße in einem Ermittlungsschritt (104) eine aktuelle Verbrennungsdynamik (160) ermittelt wird und die Vorhersage der zukünftigen Verbrennungsdynamik (160) anhand der gemessenen Zustandsgröße im Vorhersageschritt (102) unter Berücksichtigung der aktuellen Verbrennungsdynamik (160) erfolgt.

3. Verfahren (100) nach Anspruch 2, wobei die aktuelle Verbrennungsdynamik (160) einen Verlauf der Verbrennungsdynamik (160) in einem ersten vorgegebenen Zeitraum umfasst.

4. Verfahren (100) nach einem der Ansprüche 2 oder 3, wobei aus einer Mehrzahl von aktuellen Verbrennungsdynamiken (160) eine Mehrzahl von zukünftigen Verbrennungsdynamiken (160) bestimmt wird, wobei anhand der Mehrzahl der zukünftigen Verbrennungsdynamiken (160) auszugebende Steuersignale in einem Festlegungsschritt (105) festgelegt werden und wobei die Ausgabe der Steuersignale im Steuerschritt (103) derart erfolgt, dass anhand einer aktuell ermittelten Verbrennungsdynamik (160) das auszugebende Steuersignal ausgewählt wird.

5. Verfahren (100) nach einem der Ansprüche 1 bis 4, wobei die zukünftige Verbrennungsdynamik (160) eine Vorhersage über einen Verlauf der Verbrennungsdynamik (160) in einem zweiten vorgegebenen Zeitraum umfasst.

**EP 3 928 033 B1**

6.  Verfahren (100) nach Anspruch 5, wobei der Grundzustandsprozess (165), der Rauschprozess (166) und der Spitzenprozess (167) im Vorhersageschritt (102) mittels eines bayesianischen Modells vorhergesagt werden.

7.  Verfahren (100) nach einem der Ansprüche 5 oder 6, wobei der Grundzustandsprozess (165), der Rauschprozess (166) und der Spitzenprozess (167) additiv betrachtet werden.

8.  Verfahren (100) nach einem der Ansprüche 5 bis 7, wobei der Spitzenprozess (167) als diskrete Funktion modelliert wird.

9.  Verfahren (100) nach einem der Ansprüche 5 bis 8, wobei der Grundzustandsprozess (165) als kontinuierliche Funktion modelliert wird.

10. Verfahren (100) nach einem der Ansprüche 1 bis 9, wobei mittels des Steuersignals eine Menge eines in die Gasturbine (110) eingebrachten Brennstoffs und/oder ein Verhältnis des an unterschiedlichen Orten in die Gasturbine (110) eingebrachten Brennstoffs und/oder eine Abgastemperatur verändert werden kann.

11. Verfahren (100) nach einem der Ansprüche 1 bis 10, wobei das Steuersignal anhand eines Zielparameters oder einer Kombination von Zielparametern ausgegeben wird, wobei mindestens ein Zielparameter anhand eines Emissionswertes und/oder anhand einer Verbrennungsstabilität und/oder anhand einer Effizienz einer Verbrennung festgelegt wird.

12. Computerprogramm, umfassend Befehle, die bei der Ausführung des Computerprogramms durch einen Computer diesen veranlassen, das Verfahren (100) nach einem der Ansprüche 1 bis 11 auszuführen.

13. Steuereinheit (150), umfassend einen Eingang (151) zum Messen einer Zustandsgröße und einen Ausgang (152) zur Ausgabe eines Steuersignals, ferner umfassend eine Recheneinheit (153), wobei die Recheneinheit (153) eingerichtet ist, eines der Verfahren (100) der Ansprüche 1 bis 11 durchzuführen.

14. Gasturbine (110) mit einer Steuereinheit (150) nach Anspruch 13.

**Claims**

1.  Method (100) for controlling a gas turbine (110), said method comprising the following steps:

    - measuring a state variable of a combustion within the gas turbine (110) in a measuring step (101);
    - predicting a future combustion dynamic (160) by means of the measured state variable in a predicting step (102); and
    - emitting a control signal by means of the prediction of the future combustion dynamic (160) in a controlling step (103),

    **characterized in that**

    a basic state process (165), a noise process (166) and a peak process (167) are taken into account in the predicting step (102) so as to predict the future combustion dynamic (160); wherein the basic state process is a process which leads to a slow variation of the combustion dynamic over several seconds or over several 10 seconds;
    wherein the noise process includes a superimposition of the basic state process with statistical noise on a significantly smaller time scale; and
    wherein the peak process represents an additional, very high acceleration within the combustion dynamic that arises on a very short time scale.

2.  Method (100) according to Claim 1, wherein a current combustion dynamic (160) is determined from the determined state variable in a determining step (104), and the prediction of the future combustion dynamic (160) by means of the measured state variable in the predicting step (102) takes place while taking into account the current combustion dynamic (160).

3.  Method (100) according to Claim 2, wherein the current combustion dynamic (160) comprises a profile of the com-

9

bustion dynamic (160) in a first predefined period.

4. Method (100) according to one of Claims 2 or 3, wherein a plurality of future combustion dynamics (160) are determined from a plurality of current combustion dynamics (160), wherein control signals to be emitted are established by means of the plurality of future combustion dynamics (160) in an establishing step (105), and wherein the emission of the control signals in the controlling step (103) takes place in such a manner that the control signal to be emitted is selected by means of a currently determined combustion dynamic (160).

5. Method (100) according to one of Claims 1 to 4, wherein the future combustion dynamic (160) comprises a prediction pertaining to a profile of the combustion dynamic (160) in a second predefined period.

6. Method (100) according to Claim 5, wherein the basic state process (165), the noise process (166) and the peak process (167) in the predicting step (102) are predicted by means of a Bayesian model.

7. Method (100) according to one of Claims 5 or 6, wherein the basic state process (165), the noise process (166) and the peak process (167) are considered to be additive.

8. Method (100) according to one of Claims 5 to 7, wherein the peak process (167) is modelled as a discrete function.

9. Method (100) according to one of Claims 5 to 8, wherein the basic state process (165) is modelled as a continuous function.

10. Method (100) according to one of Claims 1 to 9, wherein a quantity of a fuel introduced into the gas turbine (110) and/or a ratio of the fuel introduced into the gas turbine (110) at different locations and/or an exhaust gas temperature can be varied by means of the control signal.

11. Method (100) according to one of Claims 1 to 10, wherein the control signal is emitted by means of a target parameter or a combination of target parameters, wherein at least one target parameter is established by means of an emission value and/or by means of a combustion stability and/or by means of an efficiency of a combustion.

12. Computer program comprising commands which when executing the computer program by a computer prompt the latter to carry out the method (100) according to one of Claims 1 to 11.

13. Control unit (150) comprising an input (151) for measuring a state variable and an output (152) for emitting a control signal, furthermore comprising a computer unit (153), wherein the computer unit (153) is specified for carrying out one of the methods (100) of Claims 1 to 11.

14. Gas turbine (110) having a control unit (150) according to Claim 13.

**Revendications**

1. Procédé (100) de commande d'une turbine (110) à gaz comprenant les stades suivants :

- mesure d'une grandeur d'état d'une combustion dans la turbine (110) à gaz dans un stade (101) de mesure ;
- prédiction d'une dynamique (160) de combustion à venir à l'aide de la grandeur d'état mesurée dans un stade (102) de prédiction ; et
- émission d'un signal de commande à l'aide de la prédiction de la dynamique (160) de combustion à venir dans un stade (103) de commande,

**caractérisé en ce que**,
dans le stade (102) de prédiction on prend en compte un processus (165) d'état de base, un processus (166) de bruit et un processus (167) de pointe pour prévoir la dynamique (160) de combustion à venir,

dans lequel le processus d'état de base est un processus, qui donne une variation lente de la dynamique de combustion sur plusieurs secondes ou plusieurs dizaines de seconde,
dans lequel le processus de bruit contient une superposition du processus d'état de base à des bruits statistiques sur une échelle de temps nettement plus petite, et

dans lequel le processus de pointe représente une accélération supplémentaire très grande se produisant sur une échelle de temps très courte dans la dynamique de combustion.

2. Procédé (100) suivant la revendication 1, dans lequel à partir de la moyenne de la grandeur d'état on détermine dans un stade (104) de détermination une dynamique (160) de combustion en cours et la prédiction de la dynamique (160) de combustion à venir s'effectue à l'aide de la grandeur d'état mesurée dans le stade (102) de prédiction, en tenant compte de la dynamique (160) de combustion en cours.

3. Procédé (100) suivant la revendication 2,
dans lequel la dynamique (160) de combustion en cours comprend une courbe de la dynamique (160) de combustion dans un premier laps de temps donné à l'avance.

4. Procédé (100) suivant l'une des revendications 2 ou 3, dans lequel à partir d'une pluralité de dynamiques (160) de combustion en cours, on détermine une pluralité de dynamiques (160) de combustion à venir, dans lequel, à l'aide de la pluralité de dynamiques (160) de combustion à venir, on fixe des signaux de commande à émettre dans un stade (105) de fixation et dans lequel l'émission des signaux de commande s'effectue dans le stade (103) de commande de manière à ce que, à l'aide d'une dynamique (160) de combustion déterminée en cours, où choisisse le signal de commande à émettre.

5. Procédé (100) suivant l'une des revendications 1 à 4,
dans lequel la dynamique (160) de combustion à venir comprend une prédiction sur une courbe dynamique (160) de combustion dans un deuxième laps de temps donné à l'avance.

6. Procédé (100) suivant la revendication 5,
dans lequel on prédit le processus (165) d'état de base, le processus (166) de bruit et le processus (167) de pointe dans le stade (102) de prédiction au moyen d'un modèle de Bayes.

7. Procédé (100) suivant l'une des revendications 5 ou 6, dans lequel on considère additivement le processus (165) d'état de base, le processus (166) de bruit et le processus (167) de pointe.

8. Procédé (100) suivant l'une des revendications 5 à 7,
dans lequel on modélise le processus (167) de pointe sous la forme d'une fonction discrète.

9. Procédé (100) suivant l'une des revendications 5 à 8,
dans lequel on modélise le processus (165) d'état de base sous la forme d'une fonction continue.

10. Procédé (100) suivant l'une des revendications 1 à 9,
dans lequel, au moyen du signal de commande, on peut modifier une quantité d'un combustible introduit dans la turbine (110) à gaz et/ou un rapport du combustible introduit en des endroits différents dans la turbine (110) à gaz et/ou une température des gaz d'échappement.

11. Procédé (100) suivant l'une des revendications 1 à 10, dans lequel on émet le signal de commande à l'aide d'un paramètre cible ou d'une combinaison de paramètres cibles, dans lequel on fixe au moins un paramètre cible à l'aide d'une valeur d'émission et/ou à l'aide d'une stabilité de combustion et/ou à l'aide d'une efficience d'une combustion.

12. Programme d'ordinateur comprenant des instructions, qui, lors de la réalisation du programme d'ordinateur par un ordinateur, font qu'elles exécutent le procédé (100) suivant l'une des revendications 1 à 11.

13. Unité (150) de commande, comprenant une entrée (151) de mesure d'une grandeur d'état et une sortie (152) d'émission d'un signal de commande, comprenant en outre une unité (153) informatique, dans laquelle l'unité (153) informatique est agencée pour effectuer l'un des procédés (100) suivant l'une des revendications 1 à 11.

14. Turbine (110) à gaz ayant une unité (150) de commande suivant la revendication 13.

FIG 1

FIG 2

FIG 3

# FIG 4

# FIG 5

**IN DER BESCHREIBUNG AUFGEFÜHRTE DOKUMENTE**

**In der Beschreibung aufgeführte Patentdokumente**

- US 2014123624 A1
- US 2005247064 A1
- US 2016010493 A1
- US 2015152791 A1
- US 2017363015 A1